(19) Europäisches Patentamt
European Patent Office
Office européen des brevets

(11) EP 1 135 423 B1

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(21) Anmeldenummer: **99950776.7**

(22) Anmeldetag: **23.10.1999**

(51) Int Cl.[7]: **C08G 18/62**, C09D 175/04, C08G 18/08

(86) Internationale Anmeldenummer:
**PCT/EP1999/008048**

(87) Internationale Veröffentlichungsnummer:
**WO 2000/032665 (08.06.2000 Gazette 2000/23)**

(54) **AUS MINDESTENS DREI KOMPONENTEN BESTEHENDES BESCHICHTUNGSMITTEL, VERFAHREN ZU SEINER HERSTELLUNG SOWIE SEINE VERWENDUNG**

COATING AGENT CONSISTING OF AT LEAST THREE COMPONENTS, METHOD FOR PRODUCING SAME AND ITS UTILISATION

AGENT DE REVETEMENT CONSTITUE D'AU MOINS TROIS COMPOSANTS, SON PROCEDE DE PRODUCTION ET SON UTILISATION

(84) Benannte Vertragsstaaten:
**DE ES FR**

(30) Priorität: **30.11.1998 DE 19855125**

(43) Veröffentlichungstag der Anmeldung:
**26.09.2001 Patentblatt 2001/39**

(73) Patentinhaber: **BASF Coatings AG**
**48165 Münster (DE)**

(72) Erfinder:
- **MAYER, Bernd**
  **D-48165 Münster (DE)**
- **RINK, Heinz-Peter**
  **D-48153 Münster (DE)**
- **NIENHAUS, Egbert**
  **D-59387 Ascheberg (DE)**
- **LÖCKEN, Wilma**
  **D-45721 Haltern (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 516 277**
**DE-A- 4 421 823**
**DE-A- 19 618 446**
**GB-A- 2 237 812**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein aus mindestens drei Komponenten bestehendes Beschichtungsmittel (3K-System), enthaltend eine Komponente (I), enthaltend mindestens ein in einem oder mehreren organischen, gegebenenfalls wasserverdünnbaren Lösemitteln gelöstes oder dispergiertes, hydroxylgruppenhaltiges oligomeres oder polymeres Harz als Bindemittel (A), eine Komponente (II), enthaltend mindestens ein in einem oder mehreren organischen, gegebenenfalls wasserverdünnbaren Lösemitteln gelöstes oder dispergiertes Polyisocyanat als Vernetzungsmittel (F), und eine Komponente (III), welche Wasser enthält. Außerdem betrifft die vorliegende Erfindung ein Verfahren zur Herstellung dieser Beschichtungsmittel sowie die Verwendung der Beschichtungsmittel in der Autoserienlackierung, in der Reparaturlackierung sowie für die Beschichtung von Kunststoffen sowie als Decklacke oder Füller.

Beschichtungsmittel oder 3K-Systeme der eingangs genannten Art, deren Bindemittel (A) neben den Hydroxylgruppen noch Säuregruppen enthalten, sind aus den deutschen Patentschriften DE-A-195 42 626 oder DE-A-44 21 823 bekannt. Diese bekannten Beschichtungsmittel weisen bereits vergleichsweise geringe Oberflächenprobleme, wie Kocher oder Strukturen, sowie hinsichtlich des Glanzes, der Ausspannung, der Spritzsicherheit, der Fülle, der Witterungsbeständigkeit und anderer wichtiger technologischer Eigenschaften ein gutes Eigenschaftsprofil auf. Hierin wird empfohlen, (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate für die Herstellung der als Bindemittel (A) verwendeten Polyacrylatharze einzusetzen. Indes werden diese Polyacrylatharze (A) in 3K-Systemen verwendet, welche Beschichtungen mit hohem Glanz liefern.

Die stetig strenger werdenden Anforderungen des Marktes machen es notwendig, daß diese bekannten Beschichtungsmittel in ihrer Homogenität, ihrer Standsicherheit, ihrer Handhabung und ihrer Kochergrenzen noch weiter verbessert werden. Außerdem soll der Lösemittelgehalt noch weiter abgesenkt werden, als dies bislang möglich war. Des weiteren sollen die bekannten 3K-Systeme auch bei forcierter Trocknung Beschichtungen liefern, welche keine Oberflächendefekte aufweisen. Dabei sollen sie eine noch höhere Benzinbeständigkeit und einen noch geringeren Grauschleier (Haze) als die bekannten 3K-Systeme haben.

Außerdem ist es in manchen Fällen erwünscht oder notwendig, statt hoch glänzender Beschichtungen matte Beschichtungen zu verwenden. Indes sind die bislang bekannten 3K-Systeme stets hinsichtlich des hohen Glanzes der hiermit hergestellten Beschichtungen optimiert worden.

Aufgabe der vorliegenden Erfindung ist es, ein neues 3K-System bereitzustellen, welches leicht herstellbar, homogen, standsicher, leicht handhabbar, lösemittelarm, kochersicher, spritzsicher und stabil bei forcierter Trocknung ist und welches matte Beschichtungen liefert, die keine Oberflächendefekte und Grauschleier aufweisen, sondern witterungsstabil und benzinbeständig sind.

Demgemäß wurde das neue, aus mindestens drei Komponenten bestehende Beschichtungsmittel, enthaltend

(I) eine Komponente, enthaltend mindestens ein in einem oder mehreren organischen, gegebenenfalls wasserverdünnbaren Lösemitteln gelöstes oder dispergiertes, hydroxylgruppenhaltiges oligomeres oder polymeres Harz als Bindemittel (A),

(II) eine Komponente, enthaltend mindestens ein in einem oder mehreren organischen, gegebenenfalls wasserverdünnbaren Lösemitteln gelöstes oder dispergiertes Polyisocyanat als Vernetzungsmittel (F), und

(III) eine Komponente, welche Wasser enthält,

gefunden, welches dadurch gekennzeichnet ist, daß die Komponente (I) oder die Komponenten (I) und (II) mindestens ein hydroxylgruppenhaltiges Polyacrylatharz (A) mit Polyetherseiten- und/oder -endgruppen der allgemeinen Formel I,

$$\mathbf{Y\text{-}(\text{-}O\text{-}R\text{-})_n\text{-}} \qquad \mathbf{(I),}$$

worin der Index und die Variablen die folgende Bedeutung haben:

n = 3 bis 100;

R = $C_2$- bis $C_6$-Alkandiyl und $C_3$- bis $C_8$-Cycloalkandiyl;

Y = Wasserstoffatom oder $C_1$- bis $C_4$-Alkyl;

als Bindemittel (A) enthält oder enthalten und wobei das Bindemittel (A)

- 5 bis 45 Gew.-% mindestens eines polyethergruppenhaltigen (Meth) Acrylats,
- 15 bis 50 Gew.-% mindestens eines von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren (a1),
- 10 bis 60 Gew.-% mindestens eines mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren (a2) und
- 0 bis 40 Gew.-%, mindestens eines Vinylaromaten (a6), einpolymerisiert enthält,

wobei sich die Anteile zu 100 Gew.-% addieren, und wobei die Monomere (a3), (a4) und (a5) wie folgt definiert sind:

a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und

a4) gegebenenfalls einem oder mehreren Vinylestern von in alpha-Stellung verzweigten Monocarbonsäuren mit 5 bis 18 C-Atomen je Molekül und/oder

a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird.

Im folgenden werden die erfindungsgemäß zu verwendenden, Polyacrylatharze (A) mit Polyetherseiten- und/ oder -endgruppen der Kürze halber als "erfindungswesentliche Bestandteile" bezeichnet.

Im folgenden wird das neue, aus mindestens drei Komponenten bestehende Beschichtungsmittel der Kürze halber als "erfndungsgemäßes Beschichtungsmittel" bezeichnet.

Die vorliegende Erfindung betrifft außerdem ein Verfahren zur Herstellung der erfindungsgemäßen Beschichtungsmittel sowie deren Verwendung in der Reparaturlackierung, für die Beschichtung von Kunststoffen sowie als Decklacke oder Füller.

Im Hinblick auf den Stand der Technik war es nicht zu erwarten, daß die Lösung der Aufgabe mit all ihren Vorteilen mit Hilfe der Polyacrylatharze (A) mit Polyetherseiten- und/oder -endgruppen, erzielt werden konnte. Dies war umso mehr überraschend, als die stofflich nah verwandten hydroxyl- und säuregruppenhaltigen Polyacrylatharze des Standes der Technik in 3K-Systeme verwendet werden, welche Beschichtungen mit hohem Glanz liefern.

Die erfindungsgemäßen Beschichtungsmittel zeichnen sich überraschenderweise durch ein Eigenschaftsprofil aus, das insbesondere hinsichtlich der Homogenität, der Fülle, der geringeren Kocherneigung, der Spritzsicherheit, des Verlaufs und der Unempfindlichkeit gegenüber forcierter Trocknung sowie der Witterungsbeständigkeit und der sehr guten Haftung der resultierenden erfindungsgemäßen Beschichtungen gegenüber dem Stand der Technik verbessert ist.

Es ist außerdem überraschend, daß die erfindungsgemäßen Beschichtungsmittel aus den mindestens drei Komponenten durch einfaches Mischen hergestellt werden können, ohne daß aufwendige Apparaturen zum Mischen bzw. Dispergieren erforderlich sind, wie sie beispielsweise in der deutschen Patentschrift DE-A-195 10 651 beschrieben werden. Die erfindungsgemäßen Beschichtungsmittel eignen sich daher insbesondere für den Bereich der Autoreparaturlackierung, da sie vom Lackierer direkt vor ihrer Applikation durch einfaches Mischen der Komponenten hergestellt und bei niedrigen Temperaturen ausgehärtet werden können.

Vorteilhaft ist außerdem, daß die aus den mindestens drei Komponenten hergestellten, erfindungsgemäßen Beschichtungsmittel nur einen geringen Gehalt an flüchtigen organischen Lösemitteln aufweisen, obwohl die Beschichtungsmittel unter Verwendung organisch gelöster bzw. dispergierter Bindemittel und Vernetzer hergestellt werden.

Darüber hinaus gewährleisten die erfindungsgemäßen Beschichtungsmittel eine hohe Variabilität, da nicht nur für wäßrige Beschichtungsmittel empfohlene Vernetzungsmittel, Pigmente und Additive, sondern auch solche, die in konventionellen Systemen verwendet werden, eingesetzt werden können.

Schließlich zeichnen sich die erfindungsgemäßen Komponenten der erfindungsgemäßen Beschichtungsmittel durch eine sehr gute Lagerstabilität aus, die der von konventionellen Beschichtungsmitteln entspricht.

Der erfindungswesentliche Bestandteil der erfindungsgemäßen Beschichtungsmittel ist in den Komponente (I) oder in den Komponenten (I) und (III), insbesondere aber in der Komponente (I), enthalten. Erfindungsgemäß handelt es sich um mindestens ein Polyacrylatharz (A) mit Polyetherseiten- und/oder -endgruppen. In den erfindungsgemäß zu verwendenden Komponente (I) oder den Komponenten (I) und (III) ist er bevorzugt in einer Menge von, bezogen

auf die Komponenten, 20 bis 90, vorzugsweise 30 bis 80, besonders bevorzugt 40 bis 75 und insbesondere 45 bis 70 Gew.-% enthalten.

Als erfindungswesentlicher Bestandteil kommen vorzugsweise alle oligomeren oder polymeren Acrylatcopolymerisate mit einem zahlenmittleren Molekulargewicht Mn zwischen 1.000 und 50.000 Dalton und einer OH-Zahl von 40 bis 300 mg KOH/g in Betracht. Wenn die Vermischung der Komponenten (I), (II) und (III) durch manuelles Rühren erfolgen soll, ist es für das erfindungsgemäße Beschichtungsmittel von Vorteil, wenn die erfindungsgemäßen Bestandteile so ausgewählt werden, daß ihre 50 %ige Lösung in Ethoxyethylpropionat bei 23°C eine Viskosität von ≤ 10 dPas, bevorzugt ≤ 6,0 dPas, aufweist. Sofern eine maschinelle Vermischung erfolgen soll, können höherviskose erfindungsgemäßen Bestandteile verwendet werden, deren 50 %ige Lösung in Ethoxyethylpropionat bei 23°C eine Viskosität von ≥ 100 dPas aufweist. Die Viskosität wird nach oben lediglich durch die Leistungsfähigkeit der Mischaggregate begrenzt.

Der erfindungswesentliche Bestandteil enthält Polyetherseiten- und/oder -endgruppen. Zwar können diese Gruppen in beliebiger Weise in den erfindungsgemäßen Bestandteil eingeführt werden, beispielsweise durch polymeranaloge Reaktionen geeigneter Polyacrylatharze mit Verbindungen, welche diese Gruppen enthalten, indes ist es erfindungsgemäß von Vorteil, den erfindungswesentlichen Bestandteil durch Copolymerisation polyethergruppenhaltiger (Meth)Acrylate und anderer hiermit copolymerisierbarer Monomere herzustellen.

Die erfindungsgemäß zu verwendenden Polyethergruppen, welche in den erfindungsgemäßen Bestandteilen enthalten sind, haben die allgemeine Formel I,

$$Y\text{-}(\text{-}O\text{-}R\text{-})_n\text{-} \qquad (I),$$

worin der Index und die Variablen die folgende Bedeutung haben:

n = 3 bis 100, vorzugsweise 5 bis 70, besonders bevorzugt 10 bis 50 und insbesondere 15 bis 30;

R = $C_2$- bis $C_6$-Alkandiyl und $C_3$- bis $C_8$-Cycloalkandiyl, insbesondere Methylen, Ethylen, Propylen, Tetramethylen, Pentamethylen oder Hexamethylen oder Cyclopropandiyl, Cyclobutandiyl, Cyclopentandiyl, Cyclohexandiyl, Cycloheptandiyl oder Cyclooctandiyl;

Y = Wasserstoffatom oder $C_1$- bis $C_4$-Alkyl, insbesondere Methyl, Ethyl, n-Propyl oder n-Butyl.

Besonders gut geeignete Polyethergruppen weisen ein zahlenmittleres Molekulargewicht Mn von 133 bis 1500, vorzugsweise 200 bis 1000, besonders bevorzugt 250 bis 900 und insbesondere 300 bis 800 Dalton auf.

Beispiele gut geeigneter erfindungsgemäß zu verwendender polyethergruppenhaltiger (Meth)Acrylate sind demnach Polyethylenglykolmonomethacrylate oder -acrylate oder Methoxypolyethylenglykolmethacrylate oder -acrylate, insbesondere diejenigen, worin die Polyethergruppen ein zahlenmittleres Molekulargewicht Mn von 700 bis 800, insbesondere 750, aufweisen.

Für die Herstellung des erfindungsgemäßen Bestandteils werden die polyethergruppenhaltigen (Meth)Acrylate mit geeigneten weiteren Monomeren copolymerisiert. Beispiele geeigneter Comonomerer sind die nachstehend bei der Herstellung der hydroxyl- und säuregruppenhaltigen Polyacrylatharze (A1) beschriebenen Monomeren (a1), wobei die dort angegebenen polyethergruppenhaltigen (Meth)Acrylate ausgenommen sind, und (a2) sowie (a6).

Die erfindungswesentlichen Bestandteile enthalten

- 5 bis 45, vorzugsweise 10 bis 40, besonders bevorzugt 15 bis 30 und insbesondere 15 bis 25 Gew.-% mindestens eines polyethergruppenhaltigen (Meth)Acrylats,
- 15 bis 50, vorzugsweise 20 bis 45, besonders bevorzugt 25 bis 40 und insbesondere 25 bis 35 Gew.-% mindestens eines der nachstehend beschriebenen Monomeren (a1),
- 10 bis 60, vorzugsweise 15 bis 50, besonders bevorzugt 20 bis 45 und insbesondere 25 bis 35 Gew.-% mindestens eines der nachstehend beschriebenen Monomeren (a2) und
- 0 bis 40 Gew.-%, vorzugsweise 1 bis 35, besonders bevorzugt 3 bis 30 und insbesondere 5 bis 25 Gew.-% mindestens eines Vinylaromaten (a6),

einpolymerisiert, wobei sich die Anteile zu 100 Gew.-% addieren.

Methodisch gesehen weist die Herstellung des erfindungsgemäßen Bestandteils keine Besonderheiten auf,

sondern erfolgt nach dem nachstehend bei der Herstellung der hydroxyl- und säuregruppenhaltigen Polyacrylatharze (A1) beschriebenen Methoden.

Die erfindungsgemäß zu verwendende Komponente (I) kann den erfindungswesentlichen Bestandteil als alleiniges Bindemittel (A) enthalten. Es können jedoch noch andere geeignete hydroxylgruppenhaltige, insbesondere hydroxyl- und säuregruppenhaltige, Bindemittel (A) in der Komponente vorhanden sein. Vorzugsweise handelt es sich hierbei um in einem oder mehreren organischen, gegebenenfalls wasserverdünnbaren Lösemitteln lösliche oder dispergierbare, hydroxyl- und säuregruppenhaltiges oligomere oder polymere Harze (A).

Beispiele geeigneter polymeren oder oligomerer Harze (A) dieser Art sind

(A1) in einem oder mehreren organischen, gegebenenfalls wasserverdünnbaren Lösemitteln gelöste oder dispergierte, Hydroxylgruppen und Säuregruppen, die in die entsprechenden Säureaniongruppen überführbar sind, enthaltende Acrylatcopolymerisate (A1) mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g ,

(A2) in einem oder mehreren organischen, gegebenenfalls wasserverdünnbaren Lösemitteln gelöste oder dispergierte, Hydroxylgruppen und Säuregruppen, die in die entsprechenden Säureaniongruppen überführbar sind, enthaltende Polyesterharze (A2) mit einem zahlenmittleren Molekulargewicht Mn zwischen 1.000 und 30.000 Dalton, einer OH-Zahl von 30 bis 250 mg KOH/g und einer Säurezahl von 5 bis 150 mg KOH/g und/oder

(A3) in einem oder mehreren organischen, gegebenenfalls wasserverdünnbaren Lösemitteln gelöste oder dispergierte, Hydroxylgruppen und Säuregruppen, die in die entsprechenden Säureanionengruppen überführbar sind, enthaltende Polyurethanharze (A3) mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g sowie

(A4) gegebenenfalls ein weiteres Bindemittel.

Wenn die Vermischung der Komponenten (I), (II) und (III) durch manuelles Rühren erfolgen soll, ist es für das erfindungsgemäße Beschichtungsmittel von Vorteil, wenn die Bindemittel (A), insbesondere die Bindemittel (A1), (A2) und/oder (A3) und (A4), so ausgewählt werden, daß ihre 50 %ige Lösung des Bindemittels (A) in Ethoxyethylpropionat bei 23°C eine Viskosität von ≤ 10 dPas aufweist. Sofern eine maschinelle Vermischung erfolgen soll, können höherviskose Bindemittel (A) verwendet werden, deren 50 %ige Lösung in Ethoxyethylpropionat bei 23°C eine Viskosität von ≥ 100 dPas aufweist. Die Viskosität wird nach oben lediglich durch die Leistungsfähigkeit der Mischaggregate begrenzt.

Als Hydroxylgruppen und Säuregruppen enthaltendes Acrylatcopolymerisat (A1) sind alle Acrylatcopolymerisate mit den angegebenen OH-Zahlen, Säurezahlen, Viskositäten und Molekulargewichten geeignet.

Besonders bevorzugt werden als Komponente (A1) Acrylatcopolymerisate eingesetzt, die erhältlich sind durch Polymerisation in einem organischen Lösemittel oder einem Lösemittelgemisch und in Gegenwart mindestens eines Polymerisationsinitiators von

a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,

a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,

a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und

a4) gegebenenfalls einem oder mehreren Vinylestern von in alpha-Stellung verzweigten Monocarbonsäuren mit 5 bis 18 C-Atomen je Molekül und/oder

a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,

a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,

wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der Polyacrylatharze (A1) kann als Komponente (a1) jeder mit (a2), (a3), (a4), (a5) und (a6) copolymerisierbare (Meth)Acrylsäurealkyl- oder - cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder - 1,4-dioldi(meth)acrylat;Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha, beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Octahydro-4,7-methano-1H-inden-dimethanol- oder Methylpropandiolmonoacrylat, -monomethacrylat, -monoethacrylat, - monocrotonat, -monomaleinat, -monofumarat oder -monoitaconat; oder Umsetzungsprodukte aus cyclischen Estern, wie z.B. epsilon-Caprolacton und diesen Hydroxyalkylestern oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester, Bernsteinsäuremono(meth)acryloyloxyethylester und Phthalsäuremono(meth)acryloyloxyethylester in Betracht.

Als Komponente (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Komponente (a6) kommmen

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilanenthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;

in Betracht.

Vorzugsweise werden vinylaromatische Kohlenwasserstoffe eingesetzt.

Es ist von Vorteil, die Polysiloxanmakromonomeren (a6) zusammen mit anderen Monomeren (a6) zu verwenden. Hierbei soll die Menge des oder der Polysiloxanmakromonomeren (a6) zur Modifizierung der Acrylatcopolymerisate (A1) weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren, betragen. Die Verwendung derartiger Polysiloxanmakromonomerer führt zu einer Verbesserung des Slips der erfindungsgemäßen Beschichtungen.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze (A1) werden erhalten durch Polymerisation von

(a1) 20 bis 60 Gew.-%, bevorzugt 30 bis 50 Gew.-%, der Komponente (a1),

(a2) 10 bis 40 Gew.-%, bevorzugt 15 bis 35 Gew.-%, der Komponente (a2),

(a3) 1 bis 15 Gew.-%, bevorzugt 2 bis 8 Gew.-%, der Komponente (a3),

(a4) 0 bis 25 Gew.-%, bevorzugt 5 bis 15 Gew.-%, der Komponente (a4),

(a5) 0 bis 25 Gew.-%, bevorzugt 5 bis 15 Gew.-%, der Komponente (a5) und

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als thermisch vernetzbare Reaktivverdünner wirken.

Beispiele geeigneter thermisch vernetzbarer Reaktivverdünner sind verzweigte, cyclische und/oder acyclische $C_9$-$C_{16}$-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vemetzbarer Reaktivverdünner sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;

Weitere Beispiele geeigneter thermisch vemetzbarer Reaktivverdünner sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner sind Polycarbonatdiole, Polyesterpolyole, Poly(meth)acrylatdiole oder hydroxylgruppenhaltige Polyadditionsprodukte.

Beispiele geeigneter isocyanatreaktiver Lösemittel sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Ethoxyethylpropionat, Isopropoxypropanol oder Methoxypropylacetat genannt.

Es ist dabei auch möglich, die Polyacrylatharze (A1) zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.

Beispiele geeigneter Polymerisationsinitiatoren sind freie Radikale bildende Initiatoren, wie z.B. tert.-Butylperoxyethylhexanoat, Benzoylperoxid, Azobisisobutyronitril und tert.-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Die Polymerisation wird zweckmäßigerweise bei einer Temperatur von 80 bis 200°C, vorzugsweise 110 bis 180°C, durchgeführt. Bevorzugt werden als Lösemittel Ethoxyethylpropionat und Isopropoxypropanol eingesetzt.

Bevorzugt wird das Polyacrylatharz (A1) nach einem Zweistufenverfahren hergestellt, da so die resultierenden erfindungsgemäßen Beschichtungsmittel eine bessere Verarbeitbarkeit aufweisen. Bevorzugt werden daher Polyacrylatharze eingesetzt, die erhältlich sind, indem

1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt.

Bevorzugt ist außerdem die Herstellung der Polyacrylatharze (A1) durch ein Zweistufenverfahren, bei dem die Stufe (I) 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Komponenten (a1), (a2), (a4), (a5) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Polyacrylatharze (A1) bei einem nicht allzu hohen Polymerisationsfestkörper, bevorzugt bei einem Polymerisationsfestkörper von 80 bis 50 Gew.-%, bezogen auf die Comonomeren, polymerisiert und anschließend die Lösemittel teilweise destillativ entfernt, so daß die entstehenden Polyacrylatharzlösungen einen Festkörpergehalt von bevorzugt 100 bis 60 Gew.-% aufweisen.

Die Herstellung der Polyacrylatharze (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter (Co)Polymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Erfindungsgemäß sind Taylorreaktoren vorteilhaft und werden deshalb für das erfindungsgemäße Verfahren bevorzugt verwendet.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität ν des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i r_i d \nu^{-1} (d/ r_i)^{1/2} \qquad (I)$$

mit

$$d = r_a - r_i.$$

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese

sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Als Hydroxylgruppen und Säuregruppen, die in die entsprechenden Säureaniongruppen überführbar sind, enthaltenden Polyester (A2) sind alle Polyester mit den angegebenen OH-Zahlen, Säurezahlen, Viskositäten und Molekulargewichten geeignet.

Bevorzugt werden als Komponente (A2) Polyester eingesetzt, die sind erhältlich durch Umsetzung von

p1) Polycarbonsäuren oder deren veresterungsfähigen Derivaten, gegebenenfalls zusammen mit Monocarbonsäuren,

p2) Polyolen, gegebenenfalls zusammen mit Monoolen,

p3) gegebenenfalls weiteren modifizierenden Komponenten und

p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) aromatische und/oder aliphatische Polycarbonsäuren eingesetzt.

Beispiele für geeignete Polycarbonsäuren sind Phthalsäure, Isophthalsäure, Terephthalsäure, Phthalsäure-, Isophthalsäure- oder Terephthalsäuremonosulfonat, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure oder Cyclobutantetracarbonsäure. Die cycloaliphatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters (A2) sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxyethylisocyanat, Polyethylenglykol, Polypropylenglykol, gegebenenfalls zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen.

Als Komponente (p3) zur Herstellung der Polyester (A2) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxydverbindungen, gegebenenfalls auch Monoisocyanate und/oder Monoepoxydverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester (A2) geeignet sind Verbindungen, die außer einer gegenüber den funktionellen Gruppen des Polyesters (A2) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A2) erfolgt nach den bekannten Methoden der Veresterung, wie dies beispielsweise in der DE-A-40 24 204, Seite 4, Zeilen 50 bis 65, beschrieben ist.
Die Umsetzung erfolgt dabei üblicherweise bei Temperaturen zwischen 180 und 280°C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure.

Üblicherweise wird die Herstellung der Polyester (A2) in Gegenwart geringer Mengen eines geeigneten Lösemittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan, eingesetzt.

Besonders bevorzugt werden als Komponente (A2) Polyester eingesetzt, die nach einem zweistufigen Verfahren hergestellt worden sind, indem zunächst ein hydroxylgruppenhaltiger Polyester mit einer OH-Zahl von 100 bis 300 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydraphthalsäureanhydrid, Trimellithsäureanhydrid, Pyromellithsäureanhydrid, Phthalsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Es ist gegebenenfalls möglich, daß das Polyacrylatharz (A1) zumindest teilweise in Gegenwart des Polyesters (A2) hergestellt worden ist. Vorteilhafterweise werden in diesem Fall mindestens 20 Gew.-% und besonders vorteilhafterweise 40 bis 80 Gew.-% der Komponente (A1) in Gegenwart der Komponente (A2) hergestellt.
Die gegebenenfalls restlich vorhandene Menge der Komponente (A1) wird der Bindemittellösung anschließend zugegeben. Dabei ist es möglich, daß dieses bereits polymerisierte Harz die gleiche Monomerzusammensetzung aufweist wie das in Gegenwart des Polyesters aufgebaute Polyacrylatharz. Es kann aber auch ein hydroxylgruppenhaltiges Polyacrylatharz mit einer unterschiedlichen Monomerzusammensetzung zugefügt werden. Außerdem ist es möglich, eine Mischung verschiedener Polyacrylatharze und/oder Polyester zuzufügen, wobei gegebenenfalls ein Harz die gleiche Monomerzusammensetzung aufweist wie das in Gegenwart des Polyesters aufgebaute Polyacrylatharz.

Als hydroxyl- und säuregruppenhaltiges Polyurethanharz (A3) sind alle Polyurethanharze mit den angegebenen OH-Zahlen, Säurezahlen, Viskositäten und Molekulargewichten geeignet.

Geeignete Polyurethanharze werden beispielsweise in den folgenden Schriften beschriebenen: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolekular sein und reaktionsträge anionische bzw. zur Anionenbildung befähigte Gruppen enthalten. Es können auch niedermolekulare Polyole mit einem Molekulargewicht von 60 bis zu 400 Dalton, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethem mit einer zahlenmittleren Molerkulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze eingesetzte Alkoholkomponente zumindest zu einem gewissen Anteil aus

$u_1$) mindestens einem Diol der Formel (II)

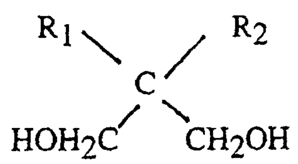

(II),

in der $R_1$ und $R_2$ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß $R_1$ und/oder $R_2$ nicht Methyl sein darf, und/oder

$u_2$) mindestens einem Diol der Formel (III)

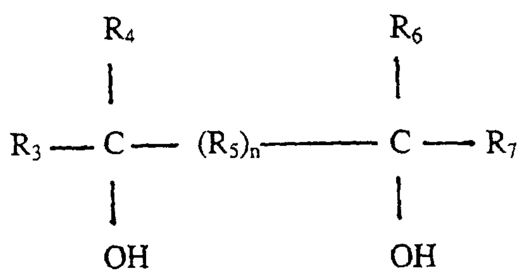

(III),

in der $R_3$, $R_4$, $R_6$ und $R_7$ jeweils gleiche oder verschiedene Reste darstellen und für einen Alkylrest mit 1 bis 6 C-Atomen, einen Cycloalkylrest oder einen Arylrest stehen und $R_5$ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole ($u_1$) sind alle Propandiole der Formel (II) geeignet, bei denen entweder $R_1$ oder $R_2$ oder $R_1$ und $R_2$ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpropandiol-1,3, 2,2-Dipropylpropandiol-1,3, 2-Cyclo-hexyl-2-methylpropandiol-1,3.

Als Diole ($u_2$) (Formel (III)) können beispielsweise 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Bevorzugt werden als Diole ($u_1$) 2-Propyl-2-ethylpropandiol-1,3, 2,2-Diethylpropandiol-1,3, 2-Butyl-2-ethyl-propandiol-1,3 und 2-Phenyl-2-ethylpropandiol-1,3 und als Komponente ($u_2$) 2,3-Dimethyl-butandiol-2,3 sowie 2,5-Dimethylhexandiol-2,5 eingesetzt. Besonders bevorzugt werden als Komponente ($a_1$) 2-Butyl-2-ethyl-propandiol-1,3 sowie 2-Phenyl-2-ethylpropandiol-1,3 und als Komponente ($u_2$) 2,5-Dimethylhexandiol-2,5 eingesetzt.

Die Diole ($u_1$) und/oder ($u_2$) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze (A3) eingesetzten Aufbaukomponenten.

Als typische multifunktionelle Isocyanate zur Herstellung der Polyurethanharze werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten verwendet. Aufgrund ihrer

guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Düsocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat. Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemeinen Formel (IV)

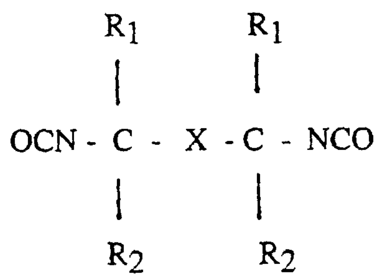

(IV)

eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und $R_1$ und $R_2$ für einen Alkylrest mit 1 - 4 C-Atomen, bevorzugt für einen Methylrest, stehen. Diisocyanate der Formel (IV) sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Weiterhin bevorzugt als Polyisocyanatkomponente sind Diisocyanate der Formel (V):

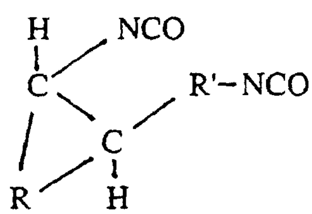

(V)

mit:

R für einen zweiwertigen Alkyl- oder Aralkylrest mit 3 bis 20 Kohlenstoffatomen und
R' für einen zweiwertigen Alkyl- oder Aralkylrest mit 1 bis 20 Kohlenstoffatomen.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen

reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am alphha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich. Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyole, eingesetzt. Als Beispiel für einsetzbare Polyole werden Trimethylolpropan, 1,3,4- Butantriol, Glycerin, Erythrit, Mesoerythrit, Arabit, Adonit usw. genannt. Bevorzugt wird Trimethylolpropan eingesetzt.

Zur Herstellung des Polyurethanharzes (A3) wird bevorzugt zunächst ein Isocyanatgruppen aufweisendes Präpolymer hergestellt, aus dem dann durch weitere Umsetzung, bevorzugt Kettenverlängerung, das gewünschte Polyurethanharz hergestellt wird. Die Umsetzung der Komponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-OS 26 24 442 und der DE-OS 32 10 051 beschrieben. Die Herstellung der Polyurethanharze kann nach den bekannten Verfahren erfolgen (z.B. Acetonverfahren).

Die Umsetzung der Komponenten erfolgt bevorzugt in Ethoxyethylpropionat (EEP) als Lösemittel. Die Menge an EEP kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.

Die Umsetzung der Komponenten kann gegebenenfalls in Gegenwart eines Katalysators, wie Organozinnverbindungen und/oder tertiären Aminen, erfolgen.

Zur Herstellung der Präpolymeren werden die Mengen der Komponenten so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt.

Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Als Komponente (A4) geeignet sind alle mit den übrigen Bestandteilen der Komponente (I) verträglichen, wasserverdünnbaren Bindemittel, beispielsweise acrylierte Polyurethanharze und/oder Polyesteracrylate.

Neben den erfindungswesentlichen Bestandteilen und gegebenenfalls den weiteren Bindemitteln (A) kann die Komponente (I) als Bestandteil (B) alle lacküblichen Pigmente und/oder Füllstoffe in Anteilen von 0 bis 60 Gew.-%, bezogen auf Komponente (I), enthalten. Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln angewandtetn Pigmente eingesetzt werden. Die Pigmente können aus anorganischen oder organischen Verbindungen bestehen und können effekt- und/oder farbgebend sein. Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen.

Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl.

Als weiteren wesentlichen Bestandteil (C) enthält die Komponente (I) mindestens ein organisches, gegebenenfalls wasserverdünnbares Lösemittel. Solche Lösemittel können auch an der Reaktion mit der vernetzenden Komponente (II) teilnehmen und somit als Reaktivverdünner wirken.

Beispiele für geeignete Lösemittel sind die schon bei der Herstellung der Polyacrylatharze (A1) genannten Verbindungen (siehe oben). Weiterhin geeignet sind Ester, Ketone, Ketoester, Glykolether wie Ethylen-, Propylen- oder Butylenglykolether, Glykolester wie Ethylen-, Propylen- oder Butylenglykolester oder Glykoletherester wie Ethoxyethylpropionat und Isopropoxypropanol. Außerdem kommen aliphatische und aromatische Lösemittel wie Dipenten, Xylol oder Shellsol$^{R}$ in Betracht

Die Lösemittel (C) können weiterhin teilweise oder vollständig aus niedermolekularen oligomeren Verbindungen bestehen, die gegenüber der vernetzenden Komponente (II) reaktiv oder auch nicht reaktiv sein können. Sofern sie reaktiv sind, handelt es sich um thermisch vernetzbare Reaktiverdünner.

Beispiele geeigneter thermisch vemetzbarer Reaktiverdünner werden vorstehend beschrieben.

Als Bestandteil (D) enthält die Komponente (I) gegebenenfalls mindestens ein Neutralisationsmittel. Beispiele für geeignete Neutralisationsmittel sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Beschichtungsmittel eingesetzte Menge an Neutralisationsmittel (D) wird so gewählt, daß 1 bis 100 Äquivalente, bevorzugt 50 bis 90 Äquivalente der Säuregruppen des Bindemittels (A) neutralisiert werden. Das Neutralisationsmittel (D) kann dabei der Komponente (I), (II) und/oder (III) zugesetzt werden. Bevorzugt wird das Neutralisationsmittel (D) aber der Komponente (III) zugesetzt.

Als Bestandteil (E) kann die Komponente (I) mindestens ein rheologiesteuerndes Additiv enthalten. Beispiele geeigneter rheologiesteuernder Additive sind die aus den Patentschriften WO 94/22968, EP-A-0 276 501, EP-A-0 249 201 oder WO 97/12945 bekannten; vemetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieslesäuren wie Aerosile; oder synthetische Polymere mit ionischen und/oder assoziativ wirkenden Gruppen wie Polyvinylalkohol, Poly(meth)acrylamid, Poly(meth) acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive Polyurethane eingesetzt.

Die Komponente (I) kann außerdem mindestens noch ein weiteres übliches Lackadditiv (E) enthalten. Beispiele für derartige Additive sind Entschäumer, Dispergierhilfsmittel, Emulgatoren, und Verlaufmittel.

Selbstverständlich können die genannten Additive (E) auch separat dem Beschichtungsmittel zugesetzt werden. In diesem Fall werden die Additive (E) dann als Komponente (IV) bezeichnet.

Bevorzugt werden zur Herstellung der erfindungsgemäßen Beschichtungsmittel Komponenten (I) eingesetzt, die aus

- 20 bis 90, vorzugsweise 30 bis 80, besonders bevorzugt 40 bis 75 und insbesondere 45 bis 70 Gew.-% des erfindungsgemäßen Bestandteils,
- 0 bis 40 Gew.-%, mindestens eines der polymeren oder oligomeren Harze (A1), (A2) und/oder (A3) sowie gegebenenfalls (A4),
- 0 bis 60 Gew.-% mindestens eines Pigments und/oder Füllstoffs (B),
- 5 bis 50 Gew.-%, bevorzugt 10 bis 40 Gew.-%, mindestens eines organischen, gegebenenfalls wasserverdünnbaren Lösemittels (C),
- 0 bis 20 Gew.-%, bevorzugt 0,1 bis 10 Gew.-%, mindestens eines Neutralisationsmittels (D) und
- 0 bis 20 Gew.-%, bevorzugt 2 bis 10 Gew.-%, mindestens eines üblichen Hilfs- und/oder Zusatzstoffes (E) (Lackadditiv)

bestehen, wobei die Summe der Gewichtsanteile der Komponenten jeweils 100 Gew.-% beträgt.

Der weitere wesentliche Bestandteil des erfindungsgemäßen Beschichtungsmittels ist mindestens ein Vernetzungsmittel (F), welches in der Komponente (II) enthalten ist.

Bei den Vernetzungsmitteln (F) handelt es sich um mindestens ein gegebenfalls in einem oder mehreren organischen, gegebenenfalls wasserverdünnbaren Lösemitteln gelöstes oder dispergiertes Di- und/oder Polyisocyanat (F).

Bei der Polyisocyanatkomponente (F) handelt es sich um organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und - sofern das manuelle Vermischen der Komponenten (I), (II) und (III) vorgesehen ist - insbesondere 1000 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat oder Butylacetat. Außerdem können die Polyisocyanate in üblicher und bekannter Weise hydrophil oder hydrophob modifiziert sein.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die bei der Beschreibung der Polyurethanharze (A3) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindon-, Urethan-, Harnstoff- und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis (isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan. 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan, oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Das erfindungsgemäße Beschichtungsmitttel kann desweiteren isocyanatgruppenfreie Vernetzungsmittel (F') enthalten. Diese können je nach ihrer Reaktivität in den Komponenten (I), (II) und/oder (III) enthalten sein; wesentlich ist, daß die Vernetzungsmittel (F') die Lagerstabilität der betreffenden Komponente, etwa durch vorzeitige Vernetzung, nicht nachteilig beeinflussen. Der Fachmann kann deshalb die geeigneten Kombinationen von Vernetzungsmittel (F') einerseits und Komponenten (I), (II) und/oder (III) andererseits in einfacher Weise auswählen.

Beispiele geeigneter Vernetzungsmittel (F') sind blockierte Di- und/oder Polyisocyanate auf der Basis der vorstehend genannten Di- und/oder Polyisocyanate (F). Beispiele für geeignete Blockierungsmittel sind aliphatische, cycloaliphatische oder araliphatische Monoalkohole wie Methyl-, Butyl-, Octyl-, Laurylalkohol, Cyclohexanol oder Phenylcarbinol; Hydroxylamine wie Ethanolamin; Oxime wie Methylethylketonoxim, Acetonoxim oder Cyclohexanonoxim; Amine wie Dibutylamin oder Diisopropylamin; CH-acide Verbindungen wie Malonsäurediester oder Acetessigsäureethylester; Heterocyclen wie Dimethylpyrazol; und/oder Lactame wie epsilon-Caprolactam. Diese Vernetzungsmittel (F') können in den Komponenten (I), (II) und/oder (III) enthalten sein.

Weitere Beispiele für geeignete Vernetzungsmittel (F') sind Polyepoxide (F'), insbesondere alle bekannten aliphatischen und/oder cycloaliphatischen und/oder aromatischen Polyepoxide, beispielsweise auf Basis Bisphenol-A oder Bisphenol-F. Als Polyepoxide (F') geeignet sind beispielsweise auch die im Handel unter den Bezeichnungen Epikote® der Firma Shell, Denacol® der Firma Nagase Chemicals Ltd., Japan, erhältlichen Polyepoxide, wie z. B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether). Geeignet sind demnach auch Epoxidverbindungen mit mindestens zwei Epoxidgruppen pro Molekül. Diese Vernetzungsmittel (F') können in den

Komponenten (I) und/oder (III) enthalten sein.

Als Vernetzungsmittel (F') können auch Tris(alkoxycarbonylamino)triazine der Formel

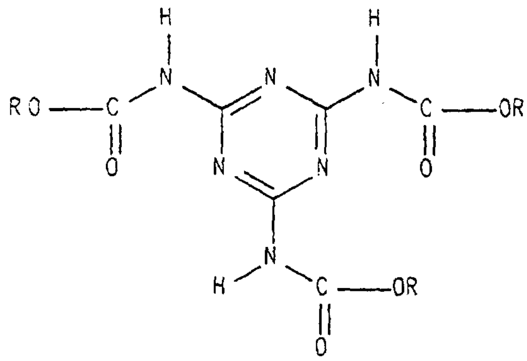

eingesetzt werden. Diese Vernetzungsmittel (F') können in den Komponenten (I) und/oder (III) enthalten sein.

Beispiele geeigneter Tris(alkoxycarbonylamino)triazine (F') werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (F') verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP -B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Diese Vernetzungsmittel (F') können in den Komponenten (I) und/oder (III) enthalten sein.

Weitere Beispiele geeigneter Vernetzungsmittel (F') sind beta-Hydroxyalkylamide wie N,N,N',N'-Tetrakis (2-hydroxyethyl)adipamid oder N,N,N',N'-Tetrakis(2-hydroxypropyl)-adipamid. Diese Vernetzungsmittel (F') können in den Komponenten (I) und/oder (III) enthalten sein.

Weitere Beispiele geeigneter Vernetzungsmittel (F') sind Siloxane, insbesondere Siloxane mit mindestens einer Trialkoxy- oder Dialkoxysilangruppe. Diese Vernetzungsmittel (F') können in den Komponenten (I), (II) und/oder (III) enthalten sein.

Die Polyisocyanate (F) werden vorteilhafterweise in einer Menge von mindestens 70 Gew.-%, besonders bevorzugt in einer Menge von 80 bis 100 Gew.-%, bezogen auf das Gesamtgewicht der Vernetzungsmittel (F) und (F') in dem erfindungsgemäßen Beschichtungsmittel, eingesetzt.

Die Bestandteile (G) und (H) der Komponente (II) entsprechen den Bestandteilen (C) und (E) der Komponente (I) ), nur daß hier Bestandteile verwendet werden, welche nicht mit Isocyanatgruppen reagieren.

Bevorzugt werden zur Herstellung der erfindungsgemäßen Beschichtungsmittel Komponenten (II) eingesetzt, die aus

(F) 50 bis 100 Gew.-%, bevorzugt 60 bis 90 Gew.-%, mindestens eines Vernetzungsmittels (F),

(G) 0 bis 50 Gew.-%, bevorzugt 10 bis 40 Gew.-%, mindestens eines organischen, gegebenenfalls wasserverdünnbaren Lösemittels und

(H) 0 bis 20 Gew.-%, bevorzugt 0 bis 10 Gew.-% mindestens eines üblichen Hilfs- und/oder Zusatzstoffes,

bestehen, wobei die Summe der Gewichtsanteile der Komponenten (F) bis (H) jeweils 100 Gew.-% beträgt.

Der weitere wesentliche Bestandteile des erfindungsgemäßen Beschichtungsmittels ist Komponente (III).

Erfindungsgemäß enthält diese Komponente (III) Wasser oder besteht hieraus. Erfindungsgemäß ist es von Vorteil, wenn die Komponente (III) außer Wasser noch weitere geeignete Bestandteile enthält.

Beispiele geeigneter Bestandteile der Komponente (III) sind die vorstehend beschriebenen erfindungswesentlichen Bestandteile, die weiteren Bindemittel (A), insbesondere die polymeren oder oligomeren Harze (A1), (A2) und/oder (A3) und gegebenenfalls (A4), sowie die vorstehend beschriebenen Reaktiwerdünner.
Die Komponente (III) enthält die weiteren Bindemittel (A), insbesondere (A1), (A2) und/oder (A3) und gegebenenfalls (A4), in einer bevorzugten Ausführungsform in wäßriger Dispersion oder in Form einer Pulverslurry.
Liegen die genannten Bestandteile in der Form einer Pulverslurry vor, können die weiteren Flammschutzmittel (F') in den Pulverslurry-Partikeln enthalten sein. Pulverslurries sind üblich und bekannt und werden beispielsweise in den Patentschriften EP-A-0 652 264, US-A-4,268,542, DE-A-196 13 547 oder die DE-A-195 18 392 beschrieben.
Ganz besonders bevorzugt werden zur Herstellung der erfindungsgemäßen Beschichtungsmittel Komponenten (III) eingesetzt, die aus

(J) 40 bis 90 Gew.-%, bevorzugt 50 bis 85 Gew.-% Wasser,

(K) 5 bis 50 Gew.-%, bevorzugt 10 bis 45 Gew.-% des Bindemittels (A), insbesondere die polymeren oder oligomeren Harze (A1), (A2) und/oder (A3) und gegebenenfalls (A4), in in Wasser dispergierter Form,

(L) 0 bis 20 Gew.-%, bevorzugt 2 bis 10 Gew.-%, mindestens eines Neutralisationsmittels und

(M) 0 bis 20 Gew.-%, bevorzugt 2 bis 10 Gew.-%, mindestens eines üblichen Hilfs- und/oder Zusatzstoffes (Lackadditiv),

bestehen, wobei die Summe der Gewichtsanteile der Komponenten (J) bis (M) jeweils 100 Gew.-% beträgt.
Die Bestandteile (L) und (M) der Komponente (III) entsprechen den Bestandteilen (D) und (E) der Komponente (I).
Die aus der in Wasser dispergierten Form der Komponente (A) und damit der in Wasser-dispergierten Form der Bindemittel (A1), (A2) und/oder (A3) und gegebenenfalls (A4) bestehende Komponente (III) kann einerseits durch Herstellung der Komponenten in organischen Lösemittel, anschließende Neutralisierung der Säuregruppen, insbesondere Carboxylgruppen, mit dem Neutralisierungsmittel (L) und abschließend Einbringen der neutralisierten Bestandteile in deionisiertes Wasser, andererseits durch Emulsionspolymerisation der monomeren Bausteine der Bindemittel (A) in Wasser hergestellt werden.
Vorzugsweise werden die Komponenten (A1), (A2) und/oder (A3) und gegebenenfalls (A4) zunächst in organischen Lösemitteln hergestellt, anschließend neutralisiert und abschließend in neutralisierter Form in Wasser dispergiert.
Bei der Herstellung der in Wasser dispergierten Form der Polyacrylatharze (A1) wird die Polymerisation im organischen Lösemittel vorzugsweise mehrstufig mit seperaten Monomeren- und Initiatorzuläufen durchgeführt. Ganz besonders bevorzugt wird das Polyacrylatharz (A1) nach dem schon zuvor beschriebenen Zweistufenverfahren hergestellt, indem

1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,

2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

3. nach Beendigung der Polymerisation das erhaltene Polyacrylatharz (A1) gegebenenfalls zumindest teilweise neutralisiert wird.

Beispiele für geeignete Neutralisationsmittel (L), wie sie in Schritt 3. eingesetzt werden, sind die schon bei der Herstellung der Komponente (I) beschriebenen Ammoniak, Ammoniumsalze und Amine (Bestandteil (D) der Komponente (I)), wobei die Neutralisation in organischer oder in wäßriger Phase erfolgen kann. Die insgesamt zur Neutralisierung der Komponente (A1) eingesetzte Menge an Neutralisationsmittel (L) wird so gewählt, daß 1 bis 100 Äquivalente, bevorzugt 50 bis 90 Äquivalente der Säuregruppen des Bindemittels (A1) neutralisiert werden.
Als Bestandteile (A2) in Komponente (III) bevorzugt eingesetzt werden Polyester (A2), die nach einem zweistufigen Verfahren hergestellt worden sind, indem zunächst ein hydroxylgruppenhaltiger Polyester mit einer OH-Zahl von 100 bis 300 mg KOH/g, einer Säurezahl von weniger als 10 mg KOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist.

Nach Beendigung der Umsetzung wird der Polyester (A2) zumindestens teilweise neutralisiert, wobei wiederum die schon bei der Herstellung der Komponente (I) beschriebenen Neutralisationsmittel (L) (Bestandteil (D) der Komponente (I)) zum Einsatz kommen und wobei die Neutralisation in organischer oder in wäßriger Phase erfolgen kann.

Zur Herstellung der Polyurethanharze (A3) für die Komponente (III) wird vorzugsweise zunächst ein Isocyanatgruppen aufweisendes Präpolymer hergestellt, aus dem dann durch weitere Umsetzung, bevorzugt durch Kettenverlängerung, das Polyurethanharz (A3) hergestellt wird.

Nach Beendigung der Polymerisation wird das erhaltene Poylurethanharz zumindest teilweise neutralisiert, wobei als geeignete Neutralisationsmittel (L) wiederum beispielhaft die schon bei der Herstellung der Komponente (I) beschriebenen Ammoniak, Ammoniumsalze und Amine (Komponente (D) der Komponente (I)) zum Einsatz kommen können und wobei die Neutralisation in organischer oder in wäßriger Phase erfolgen kann.

Als gegebenenfalls zusätzlich anwesende Komponente (A4) geeignet sind alle mit den übrigen Bestandteilen der Komponente (III) verträglichen, wasserverdünnbaren und/oder wasserdispergierbaren Bindemittel, beispielsweise acrylierte Polyurethanharze und/oder Polyesteracrylate.

Darüber hinaus kann das erfindungsgemäße Beschichtungsmittel, bezogen auf seine Gesamtmenge, bis zu 40 Gew.-% Bestandteile (N) enthalten, welche mit aktinischem Licht, insbesondere UV-Strahlung, und/oder Elektronenstrahlung härtbar sind. Diese können in der Komponente (I), (II) und/oder (III), insbesondere in der Komponente (I), enthalten sein. Dies bietet den Vorteil, daß die erfindungsgemäßen Beschichtungsmittel sowohl thermisch härtbar als auch strahlenhärtbar sind.

Als Bestandteile (N) kommen grundsätzlich alle mit aktinischem Licht und/oder Elektronenstrahlung härtbaren niedermolekularen, oligomeren und polymeren Verbindungen in Betracht, wie sie üblicherweise auf dem Gebiet der UVhärtbaren oder mit Elektronenstrahlung härtbaren Beschichtungsmittel verwendet werden. Diese strahlenhärtbaren Beschichtungsmittel enthalten üblicherweise mindestens ein, bevorzugt mehrere strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren.

Vorteilhafterweise werden die strahlenhärtbaren Bindemittel als Bestandteile (N) verwendet. Beispiele geeigneter strahlenhärtbarer Bindemittel (N) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel (N) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Die Komponenten (I), (II) und (III) werden zur Herstellung der Beschichtungsmittel bevorzugt in solchen Mengen eingesetzt, daß das Äquivalentverhältnis von Hydroxylgruppen des erfindungswesentlichen Bestandteils, gegebenenfalls der Bestandteile (A1), (A2) und/oder (A3) und gegebenenfalls (A4) sowie gegebenenfalls der thermisch härtbaren Reaktivverdünner zu den vernetzenden Gruppen des Vernetzungsmittels (F) sowie gegebenenfalls (F') zwischen 1 : 2 und 2 : 1, bevorzugt zwischen 1 : 1,2 und
1 : 1,5, liegt.

Die erfindungsgemäßen Beschichtungsmittel weisen außerdem bevorzugt einen Gesamtgehalt an

- erfindungswesentlichen Bestandteilen von 5 bis 40 Gew.-%, bevorzugt von 10 bis 30 Gew.-%,
- Bindemitteln (A), von 15 bis 60 Gew.-%, bevorzugt von 20 bis 50 Gew.-%,
- Vernetzungsmitteln (F) von 5 bis 30 Gew.-%, bevorzugt von 10 bis 20 Gew.-%,
- organischen Lösemitteln (C) von 5 bis 25 Gew.-%, bevorzugt von 10 bis 20 Gew.-%,
- Wasser von 20 bis 60 Gew.-%, bevorzugt von 25 bis 50 Gew.-%,
- Pigmenten und/oder Füllstoffen (B) von 0 bis 50 Gew.-%, bevorzugt von 0 bis 30 Gew.-%,
- üblichen Lackadditiven (E) von 0 bis 10 Gew.-%, sowie
- Bestandteilen (N), welche mit aktinischem Licht, insbesondere UV-Strahlung, und/oder Elektronenstrahlung härtbar sind, von 0 bis 40 Gew.-%

jeweils bezogen auf das Gesamtgewicht des erfindungsgemäßen Beschichtungsmittels auf.
sowie an

Die Herstellung der Komponente (I) erfolgt nach dem Fachmann bekannten Methoden durch Mischen und gegebenenfalls Dispergieren der einzelnen Bestandteile. So erfolgt beispielsweise die Einarbeitung von farbgebenden Pigmenten (B) üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die Herstellung der Komponenten (II), (III) und gegebenenfalls (IV) erfolgt ebenfalls nach dem Fachmann gut bekannten Methoden durch Mischen bzw. Dispergieren der einzelnen Bestandteile.

Die erfindungsgemäßen Beschichtungsmittel werden insbesondere durch folgendes Mischverfahren aus den Komponenten (I), (II), (III) und gegebenenfalls (IV) hergestellt:

Zur Herstellung der erfindungsgemäßen Beschichtungsmittel werden zunächst die Komponenten (I) und (II) gemischt, wobei bevorzugt diese Komponenten (I) und (II) kein Neutralisationsmittel enthalten. Dann wird zu dieser Mischung gegebenenfalls die Komponente (IV) zugesetzt. Entweder wird dann die so erhaltene Mischung in die Neutralisationsmittel (L) enthaltende Komponente (III) gegeben und das erhaltene Beschichtungsmittel dispergiert oder es wird dann in die so erhaltene Mischung die Neutralisationsmittel (L) enthaltende Komponente (III) gegeben.

Ferner kann das erfindungsgemäße Beschichtungsmittel analog zu dem gerade beschriebenen Verfahren hergestellt werden, wobei allerdings das Neutralisationsmittel (L) nicht in der Komponente (III) enthalten ist, sondern vor der Zugabe der Komponente (III) separat zugegeben wird.

Außerdem kann das erfindungsgemäße Beschichtungsmittel auch dadurch hergestellt werden, daß die Komponente (I) zunächst mit dem Neutralisationsmittel (L) versetzt wird. Selbstverständlich kann anstelle dieses Mischens auch eine Komponente (I) eingesetzt werden; die bereits das Neutralisationsmittel (L) enthält. Die so erhaltene Komponente(I) wird dann mit der Komponente (II) und gegebenenfalls der Komponente (IV) gemischt (gleichzeitig oder aufeinanderfolgende Mischung mit (II) und gegebenenfalls (IV)), die so erhaltene Mischung wird dann entweder zu der Komponente (III) gegeben oder mit der Komponente (III) versetzt, und das so jeweils erhaltene Beschichtungsmittel wird noch durch Dispergieren homogenisiert.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff, Glas oder Papier, aufgebracht werden.

Die erfindungsgemäßen Beschichtungsmittel sind aufgrund ihrer Zusammensetzung sowohl thermisch als auch strahlenhärtbar. Hierbei kann die thermische Härtung und die Härtung durch Strahlung gleichzeitig erfolgen.

Erfindungsgemäß ist es von Vorteil, die beiden Härtungsschritte nacheinander durchzuführen, weswegen dieses Verfahren bevorzugt angewandt wird. Herausragende Ergebnisse werden erhalten, wenn die thermische Härtung vor der Strahlenhärtung durchgeführt wird, weswegen dieses Verfahren erfindungsgemäß ganz besonders bevorzugt angewandt wird.

Bei ihrer Verwendung in der Autoreparaturlackierung werden die erfindungsgemäßen Beschichtungsmittel üblicherweise bei Temperaturen von unter 120°C, bevorzugt bei Temperaturen von maximal 80°C, gehärtet. Bei ihrer Verwendung in der Autoserienlackierung werden auch höhere Härtungstemperaturen angewendet werden.

Die Härtung der erfindungsgemäßen Beschichtungsmittel durch Strahlung, insbesondere UV-Strahlung, weist keine methodischen Besonderheiten auf, sondern wird in üblichen und bekannten Anlagen unter den Bedingungen durchgeführt, wie sie beispielsweise von R. Holmes in U.V. and E.B. Curing Formulations for Printing Inks, Coatings and Paints, SITA Technology, Academic Press, London, United Kindom 1984, oder von D. Stoye und W. Freitag (Editoren) in Paints , Coatings and Solvents, Second Completely Revised Edition, Wiley-VCH, Weinheim, New York, 1998, beschrieben werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden indes vorzugsweise im Bereich der Reparaturlackierung und der Lackierung von Kunststoffteilen eingesetzt.

Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base Coat-Clear Coat-Verfahren).

**Beispiele und Vergleichsversuch**

**Herstellbeispiel 1**

**Die Herstellung eines Polyacrylatharzes (A1-1)**

In einem für die Polymerisation geeigneten 100 Kilogramm-Stahlreaktor, ausgestattet mit Monomerzulauf, Initiatorzulauf, Temperaturmessvorrichtungen, Ölheizung und Rückflußkühler wurden 25 kg Ethoxyethylpropionat

(EEP) eingewogen und auf 130°C erhitzt. Hierzu dosierte man unter Rühren innerhalb von vier Stunden gleichmäßig eine Mischung aus 7,13 kg Butylmethacrylat, 5,72 kg Methylmethacrylat, 5,96 kg Styrol, 3,16 kg Laurylmethacrylat und 6,76 kg Hydroxyethylacrylat. Fünf Minuten vor diesem Zulauf wurde der Initiatorzulauf gestartet. Die Initiatorlösung (2,74 kg tert.-Butylperoxyethylhexanoat in 4,48 kg EEP) wurde während 4,5 Stunden gleichmäßig zudosiert. Nach 2,5 Stunden der Dosierzeit des ersten Monomerzulaufs wurde der zweite Monomerzulauf gestartet. Er bestand aus 2,8 kg Hydroxyethylacrylat, 1,36 kg Acrylsäure und 0,68 kg EEP und wurde während 1,5 Stunden gleichmäßig zudosiert.

Es resultierte das Polyacrylatharz (A1-1) mit einem Festkörpergehalt von 79,2 % (eine Stunde; 130°C), einer Säurezahl von 31,1 mg KOH/g und einer Viskosität von 4,4 dPas (55 %ig in EEP).

**Herstellbeispiel 2**

**Die Herstellung einer Polyesterharz-Vorstufe**

In einem für Polykondensationreaktionen geeigneten 4 Liter-Stahlreaktor wurden 1088 g Hydroxypivalinsäureneopentylglykolester, 120 g Phthalsäureanhydrid, 1268 g Isophthalsäure, 21 g Butylethylpropandiol, 489 g Neopentylglykol und 113 g Xylol vorgelegt. Anschließend wurde aufgeheizt, und das Kondensationswasser wurde kontinuierlich entfernt, bis eine Säurezahl von 3,5 mg KOH/g erreicht war. Anschließend wurde mit EEP ein Festkörpergehalt von 79,7% eingestellt. Die Säurezahl des resultierenden Polyesterharzes betrug 4,4 mg KOH/g, die Viskosität 3,6 dPas (60 %ig in EEP).

**Herstellbeispiel 3**

**Die Herstellung eines in Wasser dispergierten Polyurethanharzes (A3)**

In einem für die Polyurethanharzsynthese geeigneten 4 Liter-Stahlreaktor wurden 749 g der Polyesterharz-Vorstufe des Herstellbeispiels 2, 6,6 g Ethylbutylpropandiol, 69 g Dimethylolpropionsäure und 318 g m-Tetramethylxylylendiisocyanat vorgelegt und bei 110°C Produkttemperatur reagieren lassen, bis ein konstanter Isocyanatgehalt erreicht war. Danach wurden 101 g Trimethylolpropan in einer Portion zugesetzt, und es wurde bis zur Beendigung der Reaktion weiter erhitzt. Anschließend wurden 31,5 g EEP hinzugegeben. Nach 30minütigem Rühren wurde mit 36,7 g Dimethylethanolamin neutralisiert. Das resultierende Polyurethanharz (A3) wurde bei 90 bis 110°C in 1929,2 g 60°C warmem Wassers dispergiert. Die resultierende Dispersion war frei von Gelteilchen, homogen und wies einen Festkörpergehalt von 36,1%, eine Säurezahlen von 30,3 mg KOH/g und einen pH-Wert von 7,1 auf. Die Dispersionen war länger als vier Wochen bei 40°C lagerstabil.

**Herstellbeispiel 4**

**Die Herstellung eines in Wasser dispergierten Polyacrylatharzes (A1-2)**

Die Herstellung des Polyacrylatharzes erfolgte in einem 4 Liter-Stahlreaktor mit Rührer, Rückflußkühler, 2 Monomerzuläufen und einem Initiatorzulauf. Es wurden 385 g n-Butanol vorgelegt und auf 110°C erhitzt. Innerhalb von fünf Stunden wurden eine Mischung von 255 g Butylmethacrylat, 197 g Methylmethacrylat, 181 g Styrol, 113 g Methacrylester 13 (Methacrylsäurealkylester der Firma Rohm & Haas) und 215 g Hydroxyethylacrylat zudosiert. Nach 3,5 Stunden des ersten Monomerzulaufs wurde ein zweiter Monomerzulauf aus 113 g Hydroxyethylmethacrylat und 58 g Acrylsäure gestartet und während 1,5 Stunden gleichmäßig zudosiert. Anschließend wurde während zwei Stunden nachpolymerisiert. Nach der Neutralisation mit 63 g Dimethylethanolamin wurde noch während 30 Minuten nachgerührt. Das resultierende neutralisierte Polyacrylatharz (A1) wurde in 1338 g deionisiertem Wasser dispergiert. Das organische Lösemittel wurde im Vakuum bis auf einen Restgehalt <1,5% abdestilliert. Nach der Einstellung des Festkörpergehalts mit deionisiertem Wasser auf 39,9% wurde die resultierende Dispersion charakterisiert. Ihr pH-Wert betrug 7,2, die Säurezahl 41,4 mg KOH/g. Sie zeigte ein strukturviskoses Verhalten und war länger als vier Wochen bei 40 °C lagerstabil.

**Herstellbeispiel 5**

**Die Herstellung eines erfindungsgemäß zu verwendenden polyethergruppenhaltigen Polyacrylatharzes 1 (erfmdungsgemäßer Bestandteil)**

In einem für Polymerisationsreaktionen geeigneten 41-Edelstahlreaktor, ausgestattet mit Monomerzulauf, Initiatorzulauf, Rührer und Rückflußkühler, wurden 1421 g Ethoxyethylpropionat vorgelegt und auf 140°C erhitzt. Hierzu

wurde während vier Stunden ein Gemisch aus 231 g Butylmethacrylat, 261 g Methylmethacrylat, 271 g Styrol, 300 g Polyethylenglykolmonomethacrylat und 437 g Hydroxyethylacrylat gleichmäßig zudosiert. Fünf Minuten vor diesen Zulauf wurde der Zulauf eines Gemisches aus 125 g tert.-Butylperoxyethylhexanoat und 204 g Ethoxyethylpropionat gestartet, wobei die Gesamtdosierzeit des Initiatorzulaufs 4,5 Stunden betrug. Nach zwei Stunden der Nachpolymerisation wurde das Lösemittel im Vakuum entfernt, so daß ein Festkörpergehalt (eine Stunde; 130°C) von 80 Gew.-% resultierte. Anschließend wurde mit Butylglykol ein Festkörpergehalt von ca. 75 Gew.-% eingestellt. Die Viskosität des erfindungsgemäßen Bestandteils (55 %ig in Ethoxyethylpropionat) lag bei 3,6 dPas.

**Herstellbeispiel 6**

**Die Herstellung eines erfindungsgemäß zu verwendenden polyethergruppenhaltigen Polyacrylatharzes 2 (erfindungsgemäßer Bestandteil)**

Herstellbeispiel 5 wurde wiederholt, nur daß anstelle von Polyethylenglykolmonomethacrylat Methoxypolyethylenglykolmethacrylat verwendet wurde. Es resultierte ein erfindungsgemäßer Bestandteil eines Festkörpergehalts von 74,6 Gew.-% (eine Stunde; 130°C und einer Viskosität (55 %ig in Ethoxyethylpropionat) von 3,0 dPas.

**Beispiele1 und 2 sowie Vergleichsversuch V1**

**1.1 Herstellung erfindungsgemäßer Klarlacke (Beispiele 1 und 2) und eines nicht erfindungsgemäßen Klarlacks (Vergleichsversuch V1)**

Zur Herstellung der Komponenten (I), (II) und (III) sowie der Klarlacke wurden die in der Tabelle 1 angegebenen Bestandteile mit Hilfe eines Rührers (600 U/min) miteinander vermischt. Für die Applikation wurden die Klarlacke auf eine Viskosität von 35 s (DIN 4-Becher) eingestellt.

Tabelle 1:

| **Die Zusammensetzung der erfindungsgemäßen Klarlacke (Beispiele 1 und 2) und nicht des nicht erfindungsgemäßen Klarlacks (Vergleichsversuch V1)** | | | |
|---|---|---|---|
| **Bestandteile** | **Beispiel 1** (Gewichtsteile) | **Beispiel 2** (Gewichtsteile) | **Vergleichsversuch V1** (Gewichtsteile) |
| **Komponente (I)** | | | |
| Polyacrylatharz 1[a)] | 15,5 | | |
| Polyacrylatharz 2 [b)] | | 15,5 | |
| Polyacrylatharz (A1) [c)] | | | 15,0 |
| Dimethylethanolamin | | | 0,5 |
| Butylglykol | 2 2 | | 2 |
| Butylglykolacetat | 3 3 | | 3 |
| Surfinol [R] 104 [d)] | 1 | 1 | 1 |
| Byk [R] 331 [e)] | 0,3 | 0,3 | 0,3 |
| Byk [R] 325 [f)] | 0,3 | 0,3 | 0,3 |
| Tinuvin [R] 292 [g)] | 0,5 | 0,5 | 0,5 |
| Tinuvin [R] 1130 [h)] | 0,4 23 | 0,4 23 | 0,4 23 |
| **Komponente (II)** | | | |
| Desmodur [R] VPLS 2102[i)] | 2,5 | 2,5 | 2,5 |
| Desmodur [R] VPLS 2025/I [j)] | 12 | 12 | 12 |
| Ethoxyethylpropionat | 2,5 | 2,5 | 2,5 |
| | 17 | 17 | 17 |
| **Komponente (III)** | | | |
| VE-Wasser | 30 | 30 | 30 |
| Dapral [R] T210 [k)] | 2 | 2 | 2 |
| Polyacrylatdispersion [l)] | 10 | 10 | 10 |
| Polyurethandispersion[m)] | 18 | 18 | 18 |
| | 60 | 60 | 60 |

a) erfindungsgemäßer Bestandteil gemäß Herstellbeispiel 5
b) erfindungsgemäßer Bestandteil gemäß Herstellbeispiel 6
c) Polyacrylatharz (A1-1) gemäß Herstellbeispiel 1
d) handelsübliches Netzmittel
e), f) handelsübliche Verlaufmittel der Firma Byk Gulden
g), h) handelsübliche Lichtschutzmittel der Firma Ciba-Geigy
i) handelsübliches Polyisocyanat der Firma Bayer AG (Allophanat auf der Basis von Hexamethylendiisocyanat mit einem Isocyanatgehalt von 20% und einer Viskosität von <2000 mPas
j) handelsübliches Polyisocyanat der Firma Bayer AG (Isocyanurat auf der Basis von Hexamethylendiisocyanat mit einem Isocyanatgehalt von 22,5 Prozent und einer Viskosität <2000 mPas)
k) handelsüblicher Dialkylpolyglykolether der Firma Akzo
l) in Wasser dispergiertes Polyacrylatharz (A1-2) gemäß Herstellbeispiel 4
m) in Wasser dispergiertes Polyurethanharz (A3) gemäß Herstellbeispiel 3

### 1.2 Die Herstellung erfindungsgemäßer und nicht erfindungsgemäßer Beschichtungen und Prüftafeln

Stahltafeln, welche in üblicher und bekannter Weise mit einem Elektrotauchlack und einem Füller beschichtet waren, wurden mit einem schwarzen Basislack in einer Stärke von 12 bis 15 µm beschichtet. Der Basislack wurde während zehn Minuten bei 80°C vorgetrocknet. Hiernach wurden die Klarlacke in verschiedenen Schichtdicken aufgetragen. Anschließend wurden die Prüftafeln bei 140°C eingebrannt.

Die Tabelle 2 gibt einen Überblick über die Applikationsbedingungen und die Schichtdicken.

Tabelle 2:

| Applikationsbedingungen und Schichtdicken | | | |
|---|---|---|---|
| **Applikationsbedingungen** | **Schichtdicken** | | |
| | **Beispiel 1** (μm) | **Beispiel 2** (μm) | **Vergleichsversuch V1** (μm) |
| 1 Kl + 1 Spg | 35 | 35 | 35 |
| 1 Kl + 2 Spg | 50 | 60 | 60 |
| 1 Kl + 3 Spg | 70 | 80 | 75 |
| 1 Kl + 4 Spg | 80 | 95 | 80 |
| Kl = Klebgang (Applikation in dünner Schicht)<br>Spg = Spritzgang | | | |

In allen Fällen lag die Kochergrenze bei 60 μm; es traten nur wenige feine Nadelstiche auf.

Der Glanz wurde bei 20° nach DIN 67530 bei Beispiel 1 zu 8, bei Beispiel 2 zu 25 und bei dem Vergleichsversuch V1 zu 88 bestimmt.

Die Benzin- und Dieselfestigkeit wurde wie folgt getestet: die lackierten Prüftafeln wurden während 24 Stunden bei 23 °C an der Luft getrocknet. Hiernach wurden Filterpads mit einem Durchmesser von 2,3 cm auf die Prüftafeln gelegt. Mit einer Pipette wurden 0,75 ml Superbenzin oder Diesel (nicht älter als vier Wochen) auf die Filterpads geträufelt, wonach sofort mit 100 g schweren Gewichten belastet wurden. Nach fünf Minuten wurden die Gewichte und die Filterpads wieder entfernt. Das überschüssige Superbenzin oder Diesel wurde entfernt, und die Einwirkstellen wurden sofort auf Markierungen untersucht. Bei den Beispielen 1 und 2 sowie bei dem Vergleichsversuch V1 waren im Falle des Superbenzins nur wenige, im Falle von Diesel keine Markierungen zu sehen.

Die Prüftafeln wurden dem Kondenswasser-Konstantklimatest (KK-Test) nach DIN 50417 und 53209 unterworfen.

Die Bewertung der Blasenbildung erfolgte nach DIN 53209. Hierbei wurden die Häufigkeit und Größe der Blasen pro Flächeneinheit beurteilt. Hierbei wurde noch zwischen mittelgroßen (m) und großen (g) Blasen differenziert.

Die vorhandene Quellung der Beschichtungen wurde im Vergleich zu einer unbelasteten Prüftafel beurteilt und wie folgt benotet:

| **Kennzahl** | **Beschreibung** |
|---|---|
| 0 | nicht verändert |
| 1 | um eine Spur verändert |
| 2 | gering verändert |
| 3 | mittel verändert |
| 4 | stark verändert |
| 5 | sehr stark verändert |

Die Farbtonänderung wurde wie folgt benotet:

| **Note** | **Beschreibung** |
|---|---|
| 0 | keine |
| 1 | eine Spur |
| 2 | gering |
| 3 | mittel |
| 4 | stark |
| 5 | sehr stark |

Die Tabelle 3 gibt eine Übersicht über die Versuchsergebnisse.

Tabelle 3:

| Versuchsergebnisse des KK-Tests | | | |
|---|---|---|---|
| **Versuchsbedingungen und Parameter** | **Beispiel 1** | **Beispiel 2** | **Vergleichsversuch V1** |
| **Drei Tage:** | | | |
| Quellung | 0 | 0 | m0 / g1 |
| Farbtonänderung | 0 - 1 | 3 | 5 |
| Bemerkungen | keine Quellung | keine Quellung | |
| **Sechs Tage:** | | | |
| Quellung | 0 | 0 | m1 / g3 |
| Farbtonänderung | 1 | 2 | 5 |
| Bemerkungen | keine Quellung | keine Quellung | Randblasen stark gequollen |
| **Zehn Tage:** | | | |
| Quellung | 0 | 0 | m1 / g5 |
| Farbtonänderung | 1 | 3 | 5 |
| Bemerkungen | keine Quellung | keine Quellung | Randblasen stark gequollen |
| **Regeneration** | i.O. | i.O. sehr leicht dunkler | leichte Quellung Glanzschleier Blasenränder |

Die Versuchsergebnisse belegen die außerordentlich hohe Stabilität der erfindungsgemäßen Klarlacke.

Die Haftung der Klarlacke wurde mit Hilfe des Gitterschnitttests, inklusive des Kreuzschnittests, nach DIN EN ISO 2409: 1994-10 vor und nach dem Wassersprühentest (WS-Test) bestimmt. Dabei wurde bei jedem Zyklus die Prüftafeln während zwei Tagen in einer Klimakammer bei einer Prüfraumtemperatur von 18 - 28°C bewittert, wobei sie während 5 min pro Stunde mittels eines Aerosolgeräts mit VE-Wasser besprüht wurden, und dann während eines Tages regeneriert. Außerdem wurden die Blasen, die Quellung und die Farbtonänderung wie vorstehend angegeben beurteilt.

Die Tabelle 4 gibt einen Überblick über die erhaltenen Versuchsergebnisse.

Die Versuchsergebnisse untermauem die hohe Stabilität und Haftfestigkeit der erfindungsgemäßen Klarlacke.

Tabelle 4:

| Die Versuchsergebnisse des WS-Tests | | | |
|---|---|---|---|
| **Versuchsbedingungen Testmethoden Parameter** | **Vergleichsversuch V1** | **Beispiel 1** | **Beispiel 2** |
| **0 Zyklen:** | | | |
| Gitterschnitt | 0 | 0 | 0 |
| Kreuzschnitt | 3 | 1 - 2 | 1 |
| **2 Zyklen:** | | | |
| Gitterschnitt | 0 | 0 | 0 |
| Kreuzschnitt | 2 - 3 | 1 - 2 | 2 - 3 |
| Farbtonänderung | 3 | 0 | 1 |
| Blasen | m4 / g0 - 1 | 0 | 0 |
| Quellung | 2 - 3 | 0 | 0 |

Tabelle 4: (fortgesetzt)

| Die Versuchsergebnisse des WS-Tests | | | |
|---|---|---|---|
| **Versuchsbedingungen Testmethoden Parameter** | **Vergleichsversuch V1** | **Beispiel 1** | **Beispiel 2** |
| **5 Zyklen:** | | | |
| Gitterschnitt | 0 | 0 | 0 |
| Kreuzschnitt | 3 | 1 | 1 - 2 |
| Farbtonänderung | 5 | 1 | 2 - 3 |
| Blasen | m4 / g0 - 1 | 0 | 0 |
| Quellung | 3 | 0 | 0 |
| **Regeneration:** | | | |
| Kreuzschnitt | 2 | 1 | 2 |
| Anmerkung | sehr leichte Quellung | i.O | i.O. leicht dunkel |

## Patentansprüche

**1.** Aus mindestens drei Komponenten bestehendes Beschichtungsmittel, enthaltend

(I) eine Komponente, enthaltend mindestens ein in einem oder mehreren organischen, gegebenenfalls wasserverdünnbaren Lösemitteln gelöstes oder dispergiertes, hydroxylgruppenhaltiges oligomeres oder polymeres Harz als Bindemittel (A),
(II) eine Komponente, enthaltend mindestens ein in einem oder mehreren organischen, gegebenenfalls wasserverdünnbaren Lösemitteln gelöstes oder dispergiertes Polyisocyanat als Vernetzungsmittel (F) sowie gegebenenfalls mindestens ein weiteres Vernetzungsmittel (F'), und
(III) eine Komponente, welche Wasser enthält,

**dadurch gekennzeichnet, daß** die Komponente (I) oder die Komponente (I) und (III) mindestens ein hydroxylgruppenhaltiges Polyacrylatharz (A) mit Polyetherseiten- und/oder -endgruppen der allgemeinen Formel I,

$$\mathbf{Y\text{-}(\text{-}O\text{-}R\text{-})_n\text{-} \qquad (I),}$$

worin der Index und die Variablen die folgende Bedeutung haben:

n = 3 bis 100;
R = $C_2$- bis $C_6$-Alkandiyl und $C_3$- bis $C_8$-Cycloalkandiyl;
Y = Wasserstoffatom oder $C_1$- bis $C_4$-Alkyl;

als Bindemittel (A) enthält oder enthalten und wobei das Bindemittel (A)

- 5 bis 45 Gew.-% mindestens eines polyethergruppenhaltigen (Meth) Acrylats,
- 15 bis 50 Gew.-% mindestens eines von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren (a1),
- 10 bis 60 Gew.-% mindestens eines mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren (a2) und
- 0 bis 40 Gew.-%, mindestens eines Vinylaromaten (a6), einpolymerisiert enthält,

wobei sich die Anteile zu 100 Gew.-% addieren und wobei die Monomere (a3), (a4) und (a5) wie folgt definiert sind:

a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und

a4) gegebenenfalls einem oder mehreren Vinylestern von in alpha-Stellung verzweigten Monocarbonsäuren mit 5 bis 18 C-Atomen je Molekül und/oder

a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird.

**2.** Das Beschichtungsmittel nach Anspruch 1, **dadurch gekennzeichnet, daß** das hydroxylgruppenhaltige Polyacrylatharz (A) mit Polyetherseiten- und/oder -endgruppen in der Komponente (I) oder den Komponenten (I) und (III) in einer Menge von, bezogen auf die Komponenten, 20 bis 90, vorzugsweise 30 bis 80, besonders bevorzugt 40 bis 75 und insbesondere 45 bis 70 Gew.-% enthalten ist.

**3.** Das Beschichtungsmittel nach Anspruch 1 oder 2, **dadurch gekennzeichnet, daß** das hydroxylgruppenhaltige Polyacrylatharz (A) mit Polyetherseiten- und/oder -endgruppen ein zahlenmittleres Molekulargewicht Mn zwischen 1.000 und 50.000 Dalton und eine OH-Zahl von 40 bis 300 mg KOH/g aufweist.

**4.** Das Beschichtungsmittel nach einem der Ansprüche 1 bis 3, **dadurch gekennzeichnet, daß** das Polyacrylatharz (A) mit Polyetherseiten- und/oder -endgruppen als 50 %ige Lösung in Ethoxyethylpropionat bei 23°C eine Viskosität ≤ 6,0 dPas aufweist.

**5.** Das Beschichtungsmittel nach einem der Ansprüche 1 bis 4, **dadurch gekennzeichnet, daß** in der allgemeinen Formel I der Index und die Variablen die folgende Bedeutung haben:

n = 3 bis 100, vorzugsweise 5 bis 70, besonders bevorzugt 10 bis 50 und insbesondere 15 bis 30;

R = $C_2$- bis $C_6$-Alkandiyl und $C_3$- bis $C_8$-Cycloalkandiyl, insbesondere Methylen, Ethylen, Propylen, Tetramethylen, Pentamethylen oder Hexamethylen oder Cyclopropandiyl, Cyclobutandiyl, Cyclopentandiyl, Cyclohexandiyl, Cycloheptandiyl oder Cyclooctandiyl;

Y = Wasserstoffatom oder $C_1$- bis $C_4$-Alkyl, insbesondere Methyl, Ethyl, n-Propyl oder n-Butyl.

**6.** Das Beschichtungsmittel nach einem der Ansprüche 1 bis 5, **dadurch gekennzeichnet, daß** die Polyethergruppen ein zahlenmittleres Molekulargewicht Mn von 133 bis 1500, vorzugsweise 200 bis 1000, besonders bevorzugt 250 bis 900 und insbesondere 300 bis 800 Dalton aufweisen.

**7.** Das Beschichtungsmittel nach einem der Ansprüche 1 bis 6, **dadurch gekennzeichnet, daß** als polyethergruppenhaltige (Meth)Acrylate Polyethylenglykolmonomethacrylate und/oder -acrylate und/oder Methoxypolyethylenglykolmethacrylate und/oder -acrylate, worin die Polyethergruppen ein zahlenmittleres Molekulargewicht Mn von 700 bis 800, insbesondere 750, aufweisen, verwendet werden.

**8.** Das Beschichtungsmittel nach einem der Ansprüche 1 bis 7, **dadurch gekennzeichnet, daß** die Komponenten (I) und/oder (III) weitere hydroxylgruppenhaltige Bindemittel (A) enthalten.

**9.** Das Beschichtungsmittel nach Anspruch 8, **dadurch gekennzeichnet, daß** die Komponenten (I) und/oder (III) als weitere hydroxylgruppenhaltige Bindemittel (A)

(A1) mindestens ein in einem oder mehreren organischen, gegebenenfalls wasserverdünnbaren Lösemitteln gelöstes oder dispergiertes, Hydroxylgruppen sowie Säuregruppen, die in die entsprechenden Säureaniongruppen überführbar sind, enthaltenden Acrylatcopolymerisat (A1) mit einem zahlenmittleren Molekulargewicht Mn zwischen 1000 und 30.000 Dalton, einer OH-Zahl von 40 bis 200 mg KOH/g und einer Säurezahl von 5 bis 150 mg KOH/g,

(A2) mindestens ein in einem oder mehreren organischen, gegebenenfalls wasserverdünnbaren Lösemitteln gelöstes oder dispergiertes, Hydroxylgruppen sowie Säuregruppen, die in die entsprechenden Säureaniongruppen überführbar sind, enthaltenden Polyesterharz (A2) mit einem zahlenmittleren Molekulargewicht Mn zwischen 1000 und 30.000 Dalton, einer OH-Zahl von 30 bis 250 mg KOH/g und einer Säurezahl von 5 bis 150 mg KOH/g und/oder

(A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltenden Polyurethanharz (A3) mit einem zahlenmittleren Molekulargewicht Mn zwischen 1000 und 30.000 Dalton, einer OH-Zahl von 20 bis 200 mg KOH/g und einer Säurezahl von 5 bis 150 mg KOH/g sowie
(A4) gegebenenfalls mindestens ein weiteres Bindemittel

enthalten.

**10.** Das Beschichtungsmittel nach Anspruch 8 oder 9, **dadurch gekennzeichnet, daß** die Komponente (III) die weiteren Bindemittel (A), insbesondere (A1), (A2) und/oder (A3) und gegebenenfalls (A4), in wäßriger Dispersion enthält.

**11.** Das Beschichtungsmittel nach Anspruch 8 oder 9, **dadurch gekennzeichnet, daß** die Komponente (III) die weiteren Bindemittel (A), insbesondere (A1), (A2) und/oder (A3) und gegebenenfalls (A4), in Form einer Pulverslurry enthält.

**12.** Das Beschichtungsmittel nach einem der Ansprüche 1 bis 11, **dadurch gekennzeichnet, daß** die Komponenten (I), (II) und/oder (III) als weiteres Vernetzungsmittel (F') mindestens eine Epoxidverbindung mit mindestens zwei Epoxidgruppen pro Molekül, mindestens ein Aminoplastharz, mindestens ein blockiertes Polyisocyanat, mindestens ein Tris(alkoxycarbonylamino)triazin, mindestens ein Siloxan und/oder mindestens ein beta-Hydroxyalkylamid enthält.

**13.** Verwendung der Beschichtungsmittel gemäß einem der Ansprüche 1 bis 12 in der Autoserienlackierung, in der Reparaturlackierung, insbesondere in der Autoreparaturlackierung, zur Beschichtung von Kunststoffen und als Decklacke und/oder Füller.

## Claims

**1.** A coating composition consisting of at least three components, comprising

(I) a component comprising at least one hydroxyl-containing oligomeric or polymeric resin dispersed or dissolved in one or more organic, optionally water dilutable solvents, as binder (A),
(II) a component comprising at least one polyisocyanate dispersed or dissolved in one or more organic, optionally water dilutable solvents, as crosslinking agent (F), and, where appropriate, at least one further crosslinking agent (F'), and
(III) a component which comprises water,

wherein component (I) or components (I) and (III) comprise or comprises at least one hydroxyl-containing polyacrylate resin (A) containing polyether sidegroups and/or endgroups of the general formula I

$$\mathbf{Y\text{-}(\text{-}O\text{-}R\text{-})_n\text{-}} \qquad \mathbf{(I)}$$

in which the index and variables have the following meanings:

n = 3 to 100;
R = $C_2$ to $C_6$ alkanediyl and $C_3$ to $C_8$ cycloalkanediyl;
Y = hydrogen atom or $C_1$ to $C_4$ alkyl;

as binder (A) and where the binder (A) contains

- 5 to 45% by weight of at least one (meth)acrylate containing polyether groups,
- 15 to 50% by weight of at least one (meth)acrylic ester (a1) which is substantially free from acid groups and is different from but copolymerizable with (a2), (a3), (a4), (a5), and (a6); or a mixture of such monomers (a1),
- 10 to 60% by weight of at least one ethylenically unsaturated monomer (a2) which carries at least one hydroxyl group per molecule and is substantially free from acid groups, and which is copolymerizable with (a1), (a3),

(a4), (a5), and (a6) but different from (a5); or a mixture of such monomers (a2), and

- 0 to 40% by weight of at least one vinylaromatic (a6), in copolymerized form,

the fractions adding up to 100% by weight and the monomers (a3), (a4) and (a5) being defined as follows:

a3) an ethylenically unsaturated monomer which carries per molecule at least one acid group which can be converted into the corresponding acid anion group, and which is copolymerizable with (a1), (a2), (a4), (a5), and (a6); or a mixture of such monomers, and
a4) if desired, one or more vinyl esters of alpha-branched monocarboxylic acids having from 5 to 18 carbon atoms per molecule, and/or
a5) if desired, at least one reaction product of acrylic acid and/or methacrylic acid with the glycidyl ester of an alpha-branched monocarboxylic acid having from 5 to 18 carbon atoms per molecule, or instead of the reaction product an equivalent amount of acrylic and/or methacrylic acid which is then reacted during or after the polymerization reaction with the glycidyl ester of an alpha-branched monocarboxylic acid having from 5 to 18 carbon atoms per molecule.

**2.** The coating composition as claimed in claim 1, wherein the hydroxyl-containing polyacrylate resin (A) containing polyether sidegroups and/or endgroups is present in component (I) or components (I) and (III) in an amount, based on the components, of from 20 to 90, preferably from 30 to 80, with particular preference from 40 to 75, and in particular from 45 to 70% by weight.

**3.** The coating composition as claimed in claim 1 or 2, wherein the hydroxyl-containing polyacrylate resin (A) containing polyether sidegroups and/or endgroups has a number average molecular weight Mn of between 1000 and 50 000 daltons and an OH number of from 40 to 300 mg KOH/g.

**4.** The coating composition as claimed in any of claims 1 to 3, wherein the polyacrylate resin (A) containing polyether sidegroups and/or endgroups, as a 50% strength solution in ethoxyethyl propionate at 23°C, has a viscosity ≤ 6.0 dPas.

**5.** The coating composition as claimed in any of claims 1 to 4, wherein the index and variables in the general formula I have the following meanings:

n = 3 to 100, preferably 5 to 70, with particular preference 10 to 50, and in particular 15 to 30;
R = $C_2$ to $C_6$ alkanediyl and $C_3$ to $C_8$ cycloalkanediyl, especially methylene, ethylene, propylene, tetramethylene, pentamethylene or hexamethylene or cyclopropanediyl, cyclobutanediyl, cyclopentanediyl, cyclohexanediyl, cycloheptanediyl or cyclooctanediyl;
Y = hydrogen atom or $C_1$ to $C_4$ alkyl, especially methyl, ethyl, n-propyl or n-butyl.

**6.** The coating composition as claimed in any of claims 1 to 5, wherein the polyether groups have a number average molecular weight Mn of from 133 to 1500, preferably from 200 to 1000, with particular preference from 250 to 900, and in particular from 300 to 800 daltons.

**7.** The coating composition as claimed in one of claims 1 to 6, wherein (meth)acrylates used containing polyether groups comprise polyethylene glycol monomethacrylates and/or monoacrylates and/or methoxypolyethylene glycol methacrylates and/or acrylates in which the polyether groups have a number average molecular weight Mn of from 700 to 800, especially 750.

**8.** The coating composition as claimed in any of claims 1 to 7, wherein components (I) and/or (III) comprise further hydroxyl-containing binders (A).

**9.** The coating composition as claimed in claim 8, wherein components (I) and/or (III) comprise as further hydroxyl-containing binders (A)

(A1) one or more acrylate copolymers (A1) which are dispersed or dissolved in one or more organic, optionally water dilutable solvents, contain hydroxyl groups and acid groups which can be converted into the corresponding acid anion groups, and have a number average molecular weight Mn of between 1000 and 30 000 daltons, an OH number of from 40 to 200 mg KOH/g, and an acid number of from 5 to 150 mg KOH/g,
(A2) one or more polyester resins (A2) which are dispersed or dissolved in one or more organic, optionally

water dilutable solvents, contain hydroxyl groups and acid groups which can be converted into the corresponding acid anion groups, and have a number average molecular weight Mn of between 1000 and 30 000 daltons, an OH number of from 30 to 250 mg KOH/g, and an acid number of from 5 to 150 mg KOH/g, and/or
(A3) one or more polyurethane resins (A3) which are dispersed or dissolved in one or more organic, optionally water dilutable solvents, contain hydroxyl groups and acid groups which can be converted into the corresponding acid anion groups, and have a number average molecular weight Mn of between 1000 and 30 000 daltons, an OH number of from 20 to 200 mg KOH/g, and an acid number of from 5 to 150 mg KOH/g, and also
(A4) if desired, at least one further binder.

**10.** The coating composition as claimed in claim 8 or 9, wherein component (III) comprises the further binders (A), especially (A1), (A2) and/or (A3) and, where appropriate, (A4), in aqueous dispersion.

**11.** The coating composition as claimed in claim 8 or 9, wherein component (III) comprises the further binders (A), especially (A1), (A2) and/or (A3) and, where appropriate, (A4), in the form of a powder slurry.

**12.** The coating composition as claimed in any of claims 1 to 11, wherein components (I), (II) and/or (III) comprise as further crosslinking agent (F') at least one epoxide compound containing at least two epoxide groups per molecule, at least one amino resin, at least one blocked polyisocyanate, at least one tris(alkoxycarbonylamino)triazine, at least one siloxane and/or at least one beta-hydroxyalkylamide.

**13.** The use of a coating composition as claimed in any of claims 1 to 12 in automotive OEM finishing, in refinish, especially in automotive refinish, for the coating of plastics, and as topcoat material and/or primer-surfacer.

## Revendications

**1.** Agent de revêtement constitué par au moins trois composants, contenant

(I) un composant contenant au moins une résine oligomère ou polymère, contenant des groupements hydroxyle, dissoute ou dispersée dans un ou plusieurs solvants organiques, pouvant le cas échéant être dilués à l'eau, comme liant (A),
(II) un composant contenant au moins un polyisocyanate dissous ou dispersé dans un ou plusieurs solvants organiques, pouvant le cas échéant être dilués à l'eau, comme réticulant (F) ainsi que le cas échéant au moins un autre réticulant (F') et
(III) un composant qui contient de l'eau,

**caractérisé en ce que** le composant (I) ou les composants (I) et (III) contiennent, comme liant (A), au moins une résine polyacrylate (A) contenant des groupements hydroxyle avec des groupements polyéther latéraux et/ou terminaux de formule générale I,

$$Y\text{-}(\text{-}O\text{-}R\text{-})_n\text{-} \quad (I),$$

l'indice et les variables ayant la signification suivante :

n = 3 à 100;
R = alcanediyle en $C_2$ à $C_6$ et cycloalcanediyle en $C_3$ à $C_8$ ;
Y = atome d'hydrogène ou alkyle en $C_1$ à $C_4$ ;

et le liant (A) contenant, sous forme copolymérisée

- 5 à 45% en poids d'au moins un (méth)acrylate contenant des groupements polyéther,
- 15 à 50% en poids d'au moins un ester de l'acide (méth)acrylique différent de (a2), (a3), (a4), (a5) et (a6), copolymérisable avec (a2), (a3), (a4), (a5) et (a6), essentiellement exempt de groupements acides ou d'un mélange de ces monomères (a1),
- 10 à 60% en poids d'au moins un monomère copolymérisable avec (a1), (a3), (a4), (a5) et (a6) différent de (a5), éthyléniquement insaturé, qui porte au moins un groupement hydroxyle par molécule et qui est essentiellement exempt de groupements acides, ou un mélange de ces monomères (a2) et

- 0 à 40% en poids d'au moins un aromatique de vinyle (a6),

les proportions s'ajoutant à 100% en poids et les monomères (a3), (a4) et (a5) étant définis comme suit :

a3) un monomère éthyléniquement insaturé, portant par molécule au moins un groupement acide, qui peut être transformé en groupement anionique acide correspondant, copolymérisable avec (a1), (a2), (a4), (a5) et (a6) ou un mélange de ces monomères et
a4) le cas échéant un ou plusieurs esters de vinyle d'acides monocarboxyliques ramifiés en position alpha, comprenant 5 à 18 atomes de carbone par molécule et/ou
a5) le cas échéant au moins un produit de transformation de l'acide acrylique et/ou méthacrylique avec l'ester glycidylique d'un acide monocarboxylique ramifié en position alpha comprenant 5 à 18 atomes de carbone par molécule ou, au lieu du produit de transformation, une quantité équivalente d'acide acrylique et/ou méthacrylique qui est alors transformée pendant ou après la réaction de polymérisation avec l'ester glycidylique d'un acide monocarboxylique ramifié en position alpha comprenant 5 à 18 atomes de carbone par molécule.

2. Agent de revêtement selon la revendication 1, **caractérisé en ce que** la résine de polyacrylate (A) contenant des groupements hydroxyle avec des groupements polyéther latéraux et/ou terminaux est contenue dans le composant (I) ou dans les composants (I) et (III) en une quantité, par rapport aux composants, de 20 à 90, de préférence de 30 à 80, de manière particulièrement préférée de 40 à 75 et en particulier de 45 à 70% en poids.

3. Agent de revêtement selon la revendication 1 ou 2, **caractérisé en ce que** la résine de polyacrylate (A) contenant des groupements hydroxyle avec des groupements polyéther latéraux et/ou terminaux présente un poids moléculaire numérique moyen Mn entre 1000 et 50000 Daltons et un indice OH de 40 à 300 mg KOH/g.

4. Agent de revêtement selon l'une quelconque des revendications 1 à 3, **caractérisé en ce que** la résine de polyacrylate (A) avec des groupements polyéther latéraux et/ou terminaux présente une viscosité ≤ 6,0 dPa.s sous forme de solution à 50% dans du propionate d'éthoxyéthyle à 23°C.

5. Agent de revêtement selon l'une quelconque des revendications 1 à 4, **caractérisé en ce que** dans la formule générale I, l'indice et les variables présentent la signification suivante :

n = 3 à 100, de préférence 5 à 70, de manière particulièrement préférée 10 à 50 et en particulier 15 à 30;
R = alcanediyle en $C_2$ à $C_6$ et cycloalcanediyle en $C_3$ à $C_8$, en particulier méthylène, éthylène, propylène, tétraméthylène, pentaméthylène ou hexaméthylène ou cyclopropanediyle, cyclobutanediyle, cyclopentanediyle, cyclohexanediyle, cycloheptanediyle ou cyclooctanediyle ;
Y = atome d'hydrogène ou alkyle en $C_1$ à $C_4$, en particulier méthyle, éthyle, n-propyle ou n-butyle.

6. Agent de revêtement selon l'une quelconque des revendications 1 à 5, **caractérisé en ce que** les groupements polyéther présentent un poids moléculaire numérique moyen Mn de 133 à 1500, de préférence de 200 à 1000, de manière particulièrement préférée de 250 à 900 et en particulier de 300 à 800 Daltons.

7. Agent de revêtement selon l'une quelconque des revendications 1 à 6, **caractérisé en ce qu'**on utilise, comme (méth)acrylates contenant des groupements polyéther des monométhacrylates et/ou des monoacrylates de polyéthylèneglycol et/ou des méthacrylates et/ou des acrylates de méthoxypolyéthylèneglycol, dans lesquels les groupements polyéther présentent un poids moléculaire numérique moyen Mn de 700 à 800, en particulier de 750.

8. Agent de revêtement selon l'une quelconque des revendications 1 à 7, **caractérisé en ce que** les composants (I) et/ou (III) contiennent d'autres liants (A) contenant des groupements hydroxyle.

9. Agent de revêtement selon la revendication 8, **caractérisé en ce que** les composants (I) et/ou (III) contiennent, comme autres liants (A) contenant des groupements hydroxyle

(A1) au moins un copolymère d'acrylate (A1) dissous ou dispersé dans un ou plusieurs solvants organiques, pouvant le cas échéant être dilués à l'eau, contenant des groupements hydroxyle ainsi que des groupements acides qui peuvent être transformés en groupements anioniques acides correspondants, présentant un poids moléculaire numérique moyen Mn entre 1000 et 30000 Daltons, un indice OH de 40 à 200 mg KOH/g et un indice d'acide de 5 à 150 mg KOH/g,

(A2) au moins une résine de polyester (A2) dissoute ou dispersée dans un ou plusieurs solvants organiques, pouvant le cas échéant être dilués à l'eau, contenant des groupements hydroxyle ainsi que des groupements acides qui peuvent être transformés en groupements anioniques acides correspondants, présentant un poids moléculaire numérique moyen Mn entre 1000 et 30000 Daltons, un indice OH de 30 à 250 mg KOH/g et un indice d'acide de 5 à 150 mg KOH/g, et/ou

(A3) au moins une résine de polyuréthane (A3) dissoute ou dispersée dans un ou plusieurs solvants organiques, pouvant le cas échéant être dilués à l'eau, contenant des groupements hydroxyle et des groupements acides qui peuvent être transformés en groupements anioniques acides correspondants, présentant un poids moléculaire numérique moyen Mn entre 1000 et 30000 Daltons, un indice OH de 20 à 200 mg KOH/g et un indice d'acide de 5 à 150 mg KOH/g ainsi que

(A4) le cas échéant au moins un autre liant.

**10.** Agent de revêtement selon la revendication 8 ou 9, **caractérisé en ce que** le composant (III) contient les autres liants (A), en particulier (A1), (A2) et/ou (A3) et le cas échéant (A4), en dispersion aqueuse.

**11.** Agent de revêtement selon la revendication 8 ou 9, **caractérisé en ce que** le composant (III) contient les autres liants (A), en particulier (A1), (A2) et/ou (A3) et le cas échéant (A4), sous forme d'une suspension de poudre.

**12.** Agent de revêtement selon l'une quelconque des revendications 1 à 11, **caractérisé en ce que** le composant (I), (II) et/ou (III) contient, comme autre réticulant (F') au moins un composé époxyde comprenant au moins deux groupements époxyde par molécule, au moins une résine aminoplastique, au moins un polyisocyanate bloqué, au moins une tris(alcoxycarbonylamino)triazine, au moins un siloxane et/ou au moins un bêta-hydroxyalkylamide.

**13.** Utilisation de l'agent de revêtement selon l'une quelconque des revendications 1 à 12 dans le laquage en série de voitures, le laquage de réparation, en particulier le laquage de réparation de voitures, pour le revêtement de matériaux synthétiques et comme laque de recouvrement et/ou comme charge.